# EUROPEAN PATENT APPLICATION

(11) **EP 2 072 860 A2**
(43) Date of publication of application: **24.06.2009**
(21) Application number: 08380334.6
(22) Date of filing: 12.12.2008
(51) Int. Cl.: F16H 3/091

(54) **Cross-shift with direct gear**

(30) Priority: 13.12.2007 ES 200702570 U
(71) Applicant: Seat, S.A., 08760 Martorell, Barcelona (ES)
(72) Inventor: Gonzalez Sanz, Xavier, 08760 Martorell-Barcelona (ES)
(74) Representative: Carvajal y Urquijo, Isabel

(57) **Abstract**

Cross-shift with direct gear comprising at least one primary axis (1) which takes the movement of the engine through the clutch, a plurality of pairs of gears (4,5) which multiply the torque, a plurality of selectors (6) which select at least one pair of gears (4,5), an intermediate wheel (8) which sets the pinion (7) with the crown wheel (3) so that the torque passes directly to the crown wheel (3) without any intermediate reduction, and a selector (9) of the direct gear.

## Description

### Object of the invention

The object of the cross-shift with direct gear is to annul the loses in the transmission of the relation of the most convenient shift through a *direct* gear between the torque input to the gear change and its output towards the differential group, improving the consumption in this relation.

### Background of the invention

Nowadays gearboxes attain the torque multiplying through couples of gears which consume between 2% and 5% of the power, and therefore increase consumption in similar percentages due to the friction between the cogs and their bending. In a standard cross-shift, the primary axis takes the engine movement through the clutch.

The torque is multiplied by the couples of gear ratios chosen, and the multiplied torque on the shaft is transmitted to the crown wheel through a pinion engaged to it.

It would be desirable to reduce the consumption due to said friction without increasing the total number of components of the shift.

### Description of the invention

In order to reduce the aforementioned problems the cross-shift with direct gear object of the present invention is presented. Said shift is based on applying a longitudinal shift as a solution to the cross-shift.

The direct gear transmits the movement of the crankshaft from the primary shaft to the differential group, without passing through any gear pair. This avoids performance losses due to friction between the gear cogs and results in a silent run and less consumption. This is achieved in a longitudinal shift, since the output shaft is aligned with the axis of the crankshaft.

Thus, while with a standard cross-shift, the geared torque on the shaft is transmitted to the crown wheel through a pinion set to said crown wheel, the present invention proposes a solution where the pinion is set to the crown wheel through an intermediate wheel. Said wheel enables to directly pass the torque to the crown without any intermediate reduction if chosen through a selector, wherein this selector makes the axis integral with the wheel, transmitting the torque towards the shift output, sparing intermediate skips.

This solution is valid for only one gear, that is why the one that is used more (or the most frequently used) must be chosen by the driver, for the saving benefits to be more evident and also to compensate the worsening in the performance of the other gears, where a gear that corresponds better with the pinion and wheel gear is involved.

### Brief description of the drawings

The following brief description of a drawing will help understand better the invention and it expressly relates to an embodiment of said invention which is presented as a non-limiting example thereof.

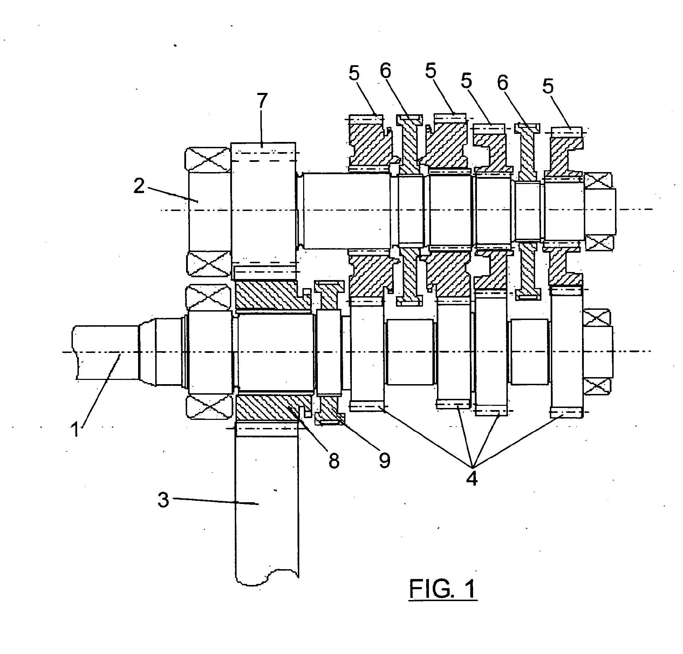

Figure 1 shows a schematic view of the cross-shift with direct gear object of the present invention.

### Preferred embodiment of the invention

As it can be appreciated in the attached drawing, the cross-shift with direct gear comprises at least one primary axis 1 which takes the movement of the engine through a clutch. Besides, it comprises a plurality of selectors 6 which select at least one pair of gears 4 and 5, and an intermediate wheel 8 which sets the pinion 7 with the crown wheel 3. The torque can go from the shaft 1 directly to the wheel crown 3 through the gear of wheel 8 with the selector 9, or else through a pair of gears 4-5, the pinion 7 and the intermediate wheel 8, if the selector 9 is not geared with said wheel.

## Claims

1. Cross-shift with direct gear **characterized by** comprising at least
- one primary axis (1) which takes the movement of the engine through the clutch,
- a plurality of pairs of gears (4,5) which multiply the torque,
- a plurality of selectors (6) which select at least one pair of gears (4,5)
- an intermediate wheel (8) which sets the pinion (7) with the crown wheel (3) so that the torque of the axis (1) passes through the wheel (8) directly to the crown wheel (3) without any intermediate reduction, and a selector (9) of the direct gear.
